(19) **Europäisches Patentamt**
**European Patent Office**
**Office européen des brevets**

(11) **EP 4 664 096 A1**

(12) **EUROPEAN PATENT APPLICATION**
published in accordance with Art. 153(4) EPC

(43) Date of publication:
**17.12.2025 Bulletin 2025/51**

(21) Application number: **24728005.0**

(22) Date of filing: **06.02.2024**

(51) International Patent Classification (IPC):
*G01N 21/84* (2006.01)

(52) Cooperative Patent Classification (CPC):
**G02B 21/12; G01N 21/17; G01N 21/84; G02B 5/20;
G02B 7/00; G02B 7/182; G02B 21/00; G02B 21/06;
G02B 21/36; G02B 21/367**

(86) International application number:
**PCT/KR2024/001685**

(87) International publication number:
**WO 2024/167256 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.02.2023  KR 20230015486
24.04.2023  KR 20230053148
20.11.2023  KR 20230160905

(71) Applicant: **CURIOSIS INC.**
**Seoul 06221 (KR)**

(72) Inventors:
• **PARK, Youngho**
**Seoul 06221 (KR)**
• **AN, Sungeun**
**Seoul 06221 (KR)**
• **KIM, Bongwoo**
**Seoul 06221 (KR)**
• **JO, Taeyeon**
**Seoul 06221 (KR)**
• **CHOI, Minji**
**Seoul 06221 (KR)**
• **PARK, Yonghee**
**Seoul 06221 (KR)**

(74) Representative: **Viering, Jentschura & Partner
mbB**
**Patent- und Rechtsanwälte
Am Brauhaus 8
01099 Dresden (DE)**

(54) **OPTICAL DEVICE COMPRISING PLURALITY OF BRIGHTFIELD LIGHT SOURCES, AND OPERATION METHOD THEREFOR**

(57)    The present disclosure provides an optical device including an objective lens; a light source array unit including a plurality of brightfield light sources; and at least one processor. In an embodiment, the optical device may select a first brightfield light source corresponding to a position of the objective lens among the plurality of brightfield light sources, and turn on the first brightfield light source. When the first brightfield light source is turned on, brightfield light sources other than the first brightfield light source among the plurality of brightfield light sources may be turned off.

**(Cont. next page)**

EP 4 664 096 A1

FIG. 2

210 Light source

220 Vessel

230 Objective lens

## Description

### [Technical Field]

The present disclosure relates to an optical device and a method of operating thereof, and more specifically, to a device that enables observation of a specimen or acquisition of an image of the specimen by using a plurality of brightfield light sources, and a method of operating thereof.

### [Background Art]

An optical device that monitors or acquires images of various types of biological samples including live cells, tissues, bacteria, and viruses, such as a microscope or a live cell imaging device, has been developed.

A brightfield optical system is an optical system that magnifies and illuminates a sample by using visible light and an objective lens. It is called a brightfield optical system because a specimen is illuminated from below and appears bright against a dark background.

The brightfield optical system is relatively simple and inexpensive, and is thus mainly used to observe cells, tissues, and other biological specimens in research, education, and other fields, especially biology and medicine.

There are several methods for performing imaging for specimen observation using such a brightfield optical system. A method of moving the position of the specimen while fixing a light source and the objective lens may cause damage to the specimen when the position of the specimen is moved. Conversely, a method of fixing the position of the specimen and adjusting the positions of the light source and objective lens may be used in order to avoid the damage to the specimen. In this case, a separate drive system is necessary to move the light source when adjusting the positions of such a light source portion and objective lens, and it takes some time to move the light source. Therefore, it may take a long time to acquire an image. For this reason, there is a need for a brightfield optical device capable of quickly performing a specimen imaging process without damaging the specimen and without a separate driving device for moving the light source.

### [Disclosure]

### [Technical Problem]

An object of the present disclosure is to provide an optical device including a plurality of brightfield light sources, and a method of operating thereof.

### [Technical Solution]

An embodiment of the present disclosure is to provide an optical device including a plurality of brightfield light sources, and a method of operating thereof.

The optical device according to an embodiment of the present disclosure includes: an objective lens; a light source array unit including a plurality of brightfield light sources; a vessel stage positioned between the objective lens and the light source array unit; and at least one processor, in which the at least one processor selects a first brightfield light source corresponding to a position of the objective lens among the plurality of brightfield light sources and turns on the first brightfield light source, and when the first brightfield light source is turned on, brightfield light sources other than the first brightfield light source among the plurality of brightfield light sources may be turned off.

In an embodiment, the at least one processor may acquire a specimen image by using the first brightfield light source.

In an embodiment, in the light source array unit, the plurality of brightfield light sources may be arranged in a lattice shape at equal intervals.

In an embodiment, the lattice shape may include at least one of an oblique lattice, a rectangular lattice, a rhombic lattice, a hexagonal lattice, or a square lattice.

In an embodiment, the at least one processor may select, as the first brightfield light source, a light source closest to the objective lens among the plurality of brightfield light sources.

In an embodiment, in a case where there are a plurality of light sources closest to the objective lens among the plurality of brightfield light sources, the at least one processor may select, as the first brightfield light source, a light source corresponding to a position inside a well among the closest light sources.

In an embodiment, among brightfield light sources corresponding to positions inside a well, a light source closest to the objective lens may be selected as the first brightfield light source.

In an embodiment, the at least one processor may recognize movement of the position of the objective lens from a first position to a second position, turn off the first brightfield light source corresponding to the first position, and turn on a second brightfield light source corresponding to the second position.

In an embodiment, the first brightfield light source corresponding to the position of the objective lens may include one or more brightfield light sources arranged in the light source array unit.

In an embodiment, the optical device may further include an array for preventing overlap of areas illuminated by the plurality of brightfield light sources.

An embodiment of the present disclosure is to provide a method of operating an optical device including a light source array unit that includes a plurality of brightfield light sources. The method includes: selecting a first brightfield light source corresponding to a position of an objective lens among the plurality of brightfield light sources; and turning on the first brightfield light source, in which when the first brightfield light source is turned on, brightfield light sources other than the first brightfield light source among the plurality of brightfield light sources may be turned off.

In an embodiment, the method may further include acquiring a specimen image by using the first brightfield light source.

In an embodiment, in the light source array unit, the plurality of brightfield light sources may be arranged in a lattice shape at equal intervals.

In an embodiment, the lattice shape may include at least one of an oblique lattice, a rectangular lattice, a rhombic lattice, a hexagonal lattice, or a square lattice.

In an embodiment, the selecting of the first brightfield light source may include selecting, as the first brightfield light source, a light source closest to the objective lens among the plurality of brightfield light sources.

In an embodiment, the selecting of the first brightfield light source may include selecting, in a case where there are a plurality of light sources closest to the objective lens among the plurality of brightfield light sources, a light source corresponding to a position inside a well among the closest light sources as the first brightfield light source.

In an embodiment, among brightfield light sources corresponding to positions inside a well, a light source closest to the objective lens may be selected as the first brightfield light source.

In an embodiment, the method may include: recognizing movement of the position of the objective lens from a first position to a second position; and turning off the first brightfield light source corresponding to the first position and turning on a second brightfield light source corresponding to the second position.

In an embodiment, the first brightfield light source corresponding to the position of the objective lens may include one or more brightfield light sources arranged in the light source array unit.

In an embodiment, the optical device may further include an array for preventing overlap of areas illuminated by the plurality of brightfield light sources.

An embodiment of the present disclosure includes a program stored in a recording medium to execute the method according to an embodiment of the present disclosure in a computer.

An embodiment of the present disclosure includes a computer-readable recording medium recording a program for executing the method according to an embodiment of the present disclosure in a computer.

An embodiment of the present disclosure includes a computer-readable recording medium recording a database used in an embodiment of the present disclosure.

**[Advantageous Effects]**

According to an embodiment of the present disclosure, a specimen imaging process may be performed without a separate driving device for moving a light source.

According to an embodiment of the present disclosure, the specimen imaging process may be quickly performed.

According to an embodiment of the present disclosure, damage to a specimen may be minimized when performing the specimen imaging process.

**[Description of Drawings]**

FIG. 1a is an example drawing illustrating a vessel-moving-type brightfield imaging optical device.

FIG. 1b is an example drawing illustrating an optical-system-moving-type brightfield imaging optical device.

FIG. 2 is an example drawing illustrating an optical device including a plurality of brightfield light sources according to an embodiment of the present disclosure.

FIG. 3 is an example drawing illustrating a brightfield imaging method according to an embodiment of the present disclosure.

FIG. 4a is an example drawing illustrating a well plate and arrangement of a plurality of brightfield light sources used for brightfield imaging according to an embodiment of the present disclosure.

FIG. 4b is a drawing illustrating a method of selecting a first brightfield light source in a case of the arrangement of the plurality of brightfield light sources in FIG. 4a.

FIG. 5a is an example drawing illustrating a well plate and arrangement of a plurality of brightfield light sources used for brightfield imaging according to an embodiment of the present disclosure.

FIG. 5b is a drawing illustrating a method of selecting a first brightfield light source in a case of the arrangement of the plurality of brightfield light sources in FIG. 5a.

FIG. 6 is a drawing illustrating a method of selecting a first brightfield light source according to an embodiment of the present disclosure.

FIG. 7a is a drawing illustrating a case where regions illuminated by a plurality of brightfield light sources according to an embodiment of the present disclosure overlap each other.

FIG. 7b is a drawing illustrating an array for preventing overlap of the areas illuminated by the plurality of light sources according to an embodiment of the present disclosure.

**[Best Mode]**

In order to clarify the technical idea of the present disclosure, embodiments of the present disclosure will be described in detail with reference to the accompanying drawings. In describing the present disclosure, if it is determined that a detailed description of a related known function or component may unnecessarily obscure the gist of the present disclosure, a detailed description thereof will be omitted. Components having substantially the same functional configuration in the drawings are given the same reference numerals and symbols as much as possible, even if they are illustrated on different drawings. For the sake of convenience in description, a device and method are described together, if necessary. Each operation of the present disclosure does not necessarily have to be performed in the order described, and may be performed in parallel, selectively, or separately.

General terms that are currently widely used were selected as terms used in the embodiments of the present disclosure as possible in consideration of functions in the present disclosure, but the terms may vary depending on the intention of those skilled in the art or precedents, the emergence of new technologies, and the like. In addition, in a specific case, there may also be terms arbitrarily chosen by the applicant, and in this case, the meanings of such terms will be described in detail in the description of the corresponding embodiments. Therefore, the terms used in the present specification should be defined based on the meanings of the terms and the overall content of the present disclosure, not simply based on the names of the terms.

Throughout the present disclosure, singular expressions may include plural expressions unless the context clearly specifies otherwise. It will be further understood that the terms such as "include" and "have" are intended to specify the presence of a feature, number, step, operation, component, part, or a combination thereof, and not to exclude the possibility of the presence or addition of one or more other features, numbers, steps, operations, components, parts or combinations thereof in advance. In other words, throughout the present disclosure, when a certain part "includes" a certain component, it means that other components may be further included rather than excluding other components, unless specifically stated to the contrary.

The expression such as "at least one of" modifies the entire list of components, not the individual components of the list. For example, "at least one of A, B, and C" and "at least one of A, B, or C" means only A, only B, only C, both A and B, both B and C, both A and C, A and B and C all, or a combination thereof.

In addition, the terms such as "...unit" and "...module" described in the present disclosure refer to a unit that processes at least one function or operation, which may be implemented as hardware or software, or a combination of hardware and software.

Throughout the present disclosure, when any one part is referred to as being "connected to" another part, it means that any one part and another part are "directly connected to" each other or are "electrically connected to" each other with another element interposed therebetween. In addition, any one part "including" any component means the further inclusion of other components rather than the exclusion of other components, unless specifically stated to the contrary.

The expression "configured (or set) to" used throughout the present disclosure may be interchangeably used with the expressions such as "suitable for", "having the capacity to", "designed to", "adapted to", "made to", or "capable of" depending on a situation. The term "configured (or set) to" may not necessarily mean "specifically designed to" in hardware. Instead, in some situations, the expression "a system configured to" may mean that the system is "capable of" doing something together with other devices or components. For example, the phrase "a processor configured (or set) to perform A, B, and C" may mean a dedicated processor (for example, an embedded processor) for performing a corresponding operation, or a generic-purpose processor (for example, CPU or application processor) capable of performing corresponding operations by executing one or more software programs stored in a memory.

The terms including ordinal numbers such as "first", "second", and the like, may be used to describe various components. However, the components are not limited by these terms. The terms are used only in order to distinguish one component from another component. For example, a first component may be named a second component and the second component may also be similarly named the first component, without departing from the scope of the present disclosure. The term "and/or" includes a combination of a plurality of related items or any one of the plurality of related items.

The term "about" used in the present disclosure means within 10%, preferably within 5%, and more preferably within 1% of a given value or range.

The term "specimen" used in the present application may be interchangeably used with the term "sample" and may include anything known in the art to be observable with optical or light microscopes. For example, the "specimen" may include cells or tissues (including both normal and pathological cells/tissues such as cells or tissues of animals, plants, fungi, protists, and bacteria), cell components (for example, nuclei, cytoplasm, chloroplasts, and mitochondria), microorganisms (for example, bacteria, protozoa, and some algae and fungi), organoids, and the like, but is not limited thereto.

Throughout the present disclosure, an "optical device" may include, without limitation, any device that uses a brightfield optical system, may include, for example, a microscope, live cell imaging equipment, and the like, and may include, without limitation, any equipment that uses brightfield optics, such as digital pathology equipment (scanner).

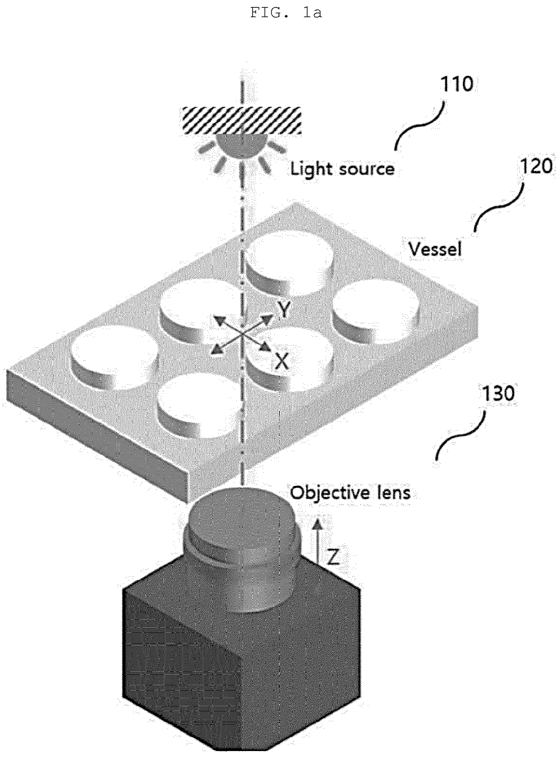

FIG. 1a is an example drawing illustrating a vessel-moving-type brightfield imaging optical device.

Referring to FIG. 1a, the vessel-moving-type brightfield imaging optical device is illustrated. In an embodiment, an objective lens (130) and a brightfield light source (110) may be aligned along a central axis, and a user may move a vessel (120) along X and Y axes and then focus the objective lens (130) along Z axis, thereby performing brightfield imaging at a position desired by the user. That is, it is a method of using a single fixed light source and performing focusing by moving only the vessel (120), and such a vessel-moving-type brightfield imaging optical device has a disadvantage that a specimen may be damaged during movement of the vessel.

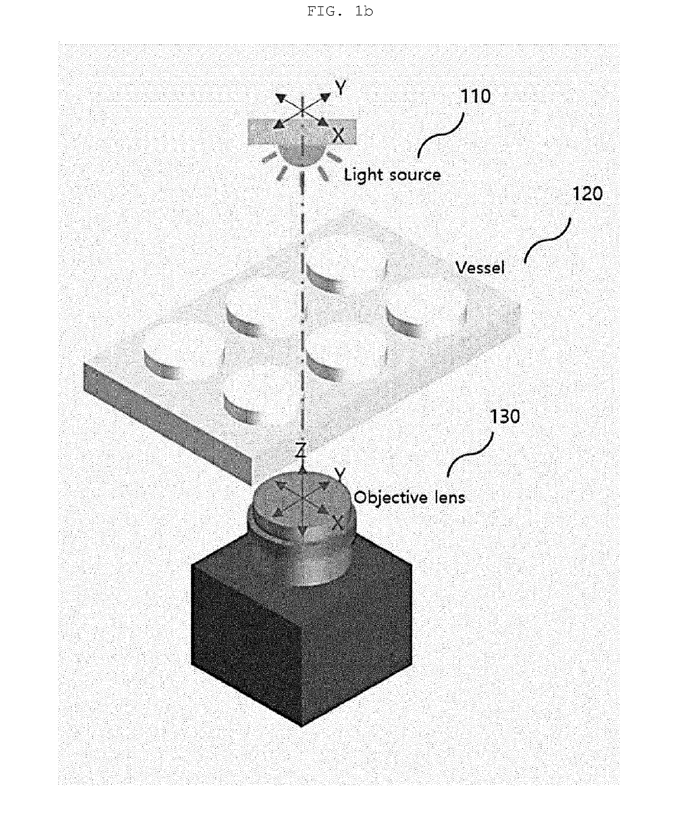

FIG. 1b is an example drawing illustrating an optical-system-moving-type brightfield imaging optical device.

Referring to FIG. 1b, the optical-system-moving-type brightfield imaging optical device is illustrated. In an embodiment, the vessel (120) may be fixed, and the objective lens (130) may be moved to a position for imaging in order to compensate for the disadvantage of the vessel-moving-type brightfield imaging optical device. As the objective lens (130) is moved, the light source (110) also needs to be moved for optical axis alignment. Therefore, such an optical-system-moving-type brightfield imaging optical device requires a separate driving system to move the light source (110), and an additional imaging time is required because the light source (110) is moved. For this reason, there is a need for an optical device capable of quickly performing imaging without a separate driving device for moving a light source.

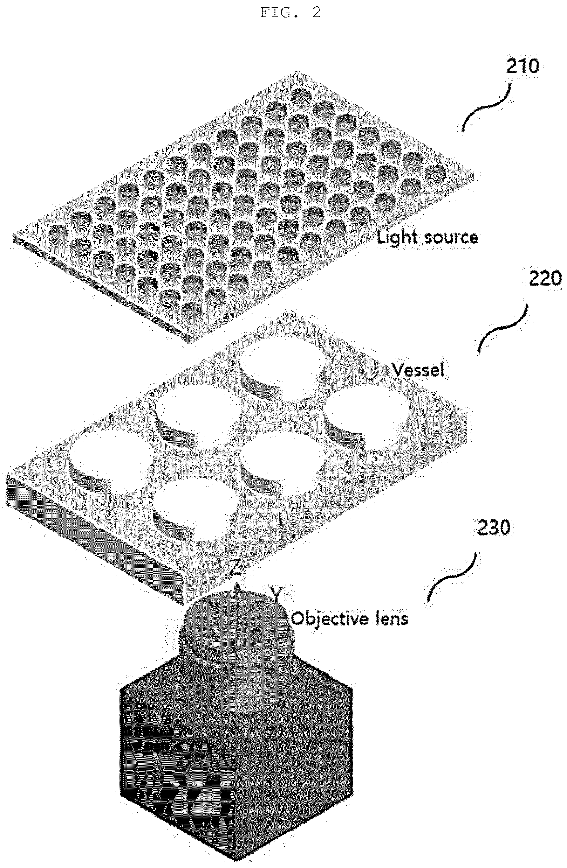

FIG. 2 is an example drawing illustrating an optical device including a plurality of brightfield light sources according to an embodiment of the present disclosure.

Referring to FIG. 2, brightfield imaging in the optical device may be performed by arranging the plurality of brightfield light sources at regular intervals and then turning on a light source corresponding to an objective lens, without moving the light source according to a position of the objective lens. Throughout the present disclosure, the "light source corresponding to the objective lens" or a "light source corresponding to the position of the objective lens" may mean a light source determined according to the position of the objective lens to perform specimen imaging by a predetermined method. For example, referring to FIG. 2, an objective lens (230) and a light source array unit (210) are disposed along the Z axis with a vessel (220) interposed therebetween. At this time, the "light source corresponding to the objective lens" or the "light source corresponding to the position of the objective lens" may be a corresponding light source based on the Z axis, and may include, for example, a light source closest to the position of the objective lens, a light source that overlaps the objective lens when the optical device is viewed in top view, a light source closest to the center of the objective lens when the optical device is viewed in top view, one light source selected by a predetermined algorithm or at random among light sources within a predetermined distance from the objective lens when the optical device is viewed in top view, one light source selected by a predetermined algorithm or at random among a plurality of light sources closest to the position of the objective lens in a case where there are a plurality of light sources closest to the position of the objective lens, a light source selected by a predetermined algorithm or at random among n light sources arranged in the order of proximity to the position of the objective lens, and the like. However, the "light source corresponding to the objective lens" or the "light source corresponding to the position of the objective lens" is not limited thereto, and may mean light sources at various positions that may be determined according to the position of the objective lens to perform specimen imaging.

According to an embodiment of the present disclosure, there is no need to move the vessel (220) unlike the optical device of FIG. 1a, a separate driving device is not required to move the light source unlike FIG. 1b, and the position of the light source may be changed simply by electrical switching, and thus, imaging may be performed at a higher speed compared to existing methods.

In an embodiment, the optical device may include the objective lens (230), the light source array unit (210) including the plurality of brightfield light sources, a vessel stage positioned between the objective lens and the light source array unit and on which the vessel (220) may be placed, at least one processor, and the like. However, the components of the optical device are not limited to the above-described example, and the optical device may include more or fewer components than the above-described components. For example, the light source array unit (210) may be a light source device separately provided outside the light source device.

In an embodiment, the processor may control the overall operation of the optical device and include at least one processor such as CPU or GPU. The processor may control other components included in the optical device to perform an operation to operate the optical device. For example, the processor may execute a program stored in a memory, read a stored file, or store a new file. In an embodiment, the processor may perform the operation to operate the optical device by executing a program stored in the memory. For example, the processor may select a first brightfield light source corresponding to the position of the objective lens (230) among the plurality of brightfield light sources, and turn on the selected first brightfield light source. In this case, brightfield light sources of the light source array unit (210) other than the first brightfield light source may be turned off. Further, the processor may acquire a specimen image by using the turned-on first brightfield light source. In a case where the processor recognizes movement of the position of the objective lens from a first position to a second position, the processor may turn off a brightfield light source corresponding to the first position and turn on a brightfield light source corresponding to the second position.

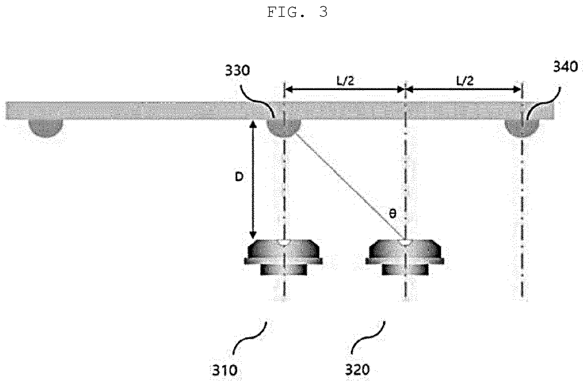

A method of selecting a brightfield light source corresponding to the position of the objective lens (230) will be described in more detail below with reference to FIGS. 3 to 6. In FIGS. 3 to 6, a method of selecting the first brightfield light source is described as an example. However, it is a matter of course that a method of selecting the second brightfield light source corresponding to the moved position of the objective lens may also be similarly performed in a case where the position of the objective lens is changed.

In an embodiment, in the light source array unit (210), the plurality of brightfield light sources may be arranged in a lattice shape at equal intervals. For example, the lattice shape may include an oblique lattice, a rectangular lattice, a rhombic lattice, a hexagonal lattice, a square lattice, and the like.

In an embodiment, in a case where a distance between a central position of the objective lens (230) and a central position of the light source array unit (210) is identified as being out of a certain range when the optical device is viewed in top view, the processor may adjust the position of the light source array unit (210) to be closer to the objective lens (230). Alternatively, the optical device may include a plurality of light source array units to cover a wider range of positions to which the objective lens may move.

FIG. 3 is an example drawing illustrating a brightfield imaging method according to an embodiment of the present disclosure.

Referring to FIG. 3, the optical device may select a light source closest to the objective lens as the first brightfield light source when selecting the first brightfield light source corresponding to the position of the objective lens among the plurality of brightfield light sources. For example, in a case where the objective lens is at a first position (310), a first light source (330) closest to the first position may be selected as the first brightfield light source. As another example, in a case where the objective lens is at a second position (320), light sources closest to the second position (320) may be the first light source (330) and a second light source (340). In a case where there are a plurality of closest light sources as described above, the optical device may select and turn on any one of the plurality of closest light sources. For example, when selecting any one of the plurality of closest light sources, the optical device may select a light source at random, select a light source with the lowest or highest identification number, select a light source corresponding to a position inside a well, or select a light source positioned in a specific direction. However, a method of selecting any one light source is not limited thereto, a combination thereof may be used, and the optical device may select, as the first brightfield light source to be turned on, one of the plurality of closest light sources according to a pre-designed method. Here, the light source corresponding to the position inside the well may be a light source present above the well, and may be a light source in a region that overlaps the inside of the well when viewed in top view.

In an embodiment, in a case where the objective lens is at the first position (310), the objective lens and the light source may be aligned along a central axis, and in a case where the objective lens is at the second position (320), the objective lens and the light source may be positioned at an angle. However, a distance D between the objective lens and the light source may be designed to be sufficiently longer than a distance L between the light sources to minimize an inclined angle $\theta$ of the light source at the second position (320), so that specimen imaging may be performed at the second position (320) similarly to that when the objective lens and the light source are aligned along the central axis.

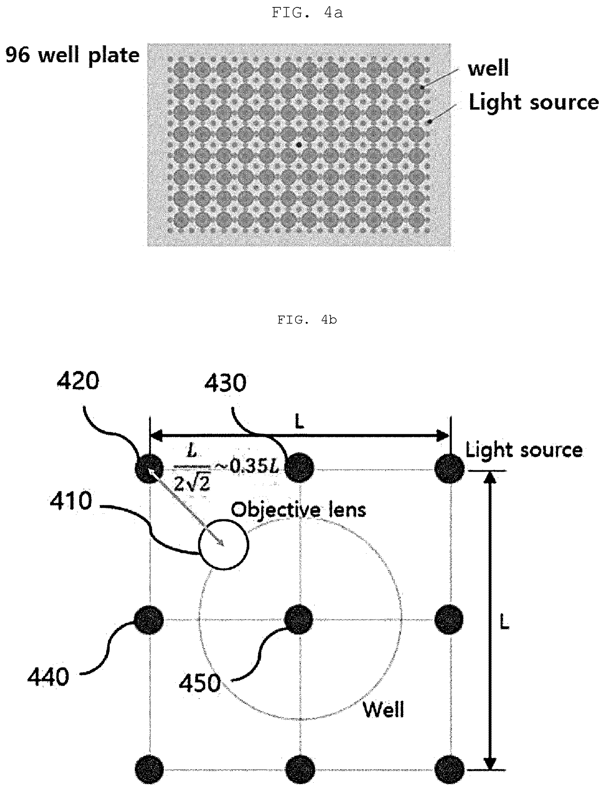

FIG. 4a is an example drawing illustrating a well plate and arrangement of a plurality of brightfield light sources used for brightfield imaging according to an embodiment of the present disclosure.

Referring to FIG. 4a, a schematic top view of the plurality of brightfield light sources and the well plate viewed from above are illustrated. In FIG. 4a, the well plate including 96 wells and a light source array unit of the rectangular lattice will be described as an example. However, the number, shape, and arrangement of wells, and the number, shape, and arrangement of light sources are only examples and may of course be changed.

In an embodiment, there may be a brightfield light source that overlaps the well when viewed in top view, and there may also be a brightfield light source that does not overlap the well. The optical device may select, as a first brightfield light source, a light source closest to a position of an objective lens in top view when selecting the first brightfield light source corresponding to the objective lens. Alternatively, the optical device may select, as the first brightfield light source, a light source closest to the position of the objective lens among light sources that overlap the well in top view.

FIG. 4b is a drawing illustrating a method of selecting the first brightfield light source in a case of the arrangement of the plurality of brightfield light sources in FIG. 4a.

Referring to FIG. 4b, a top view of one well and brightfield light sources capable of illuminating the well or surroundings thereof in FIG. 4a is illustrated. In an embodiment, the light source device may select the first brightfield light source corresponding to a position of an objective lens (410).

For example, a light source closest to the position of the objective lens (410) may be selected as the first brightfield light source. In the example of FIG. 4b, a first light source (420), a second light source (430), a third light source (440), and a fourth light source (450) may be selected as light sources closest to the position of the objective lens (410). In a case where there are a plurality of light sources closest to the position of the objective lens (410) as described above, the light source device may arbitrarily select one light source and determine the selected light source as the first brightfield light source to be turned on. Alternatively, in a case where there are a plurality of light sources closest to the position of the objective lens (410), the light source device may determine one light source according to a predetermined algorithm. For example, the optical device may determine, as the first brightfield light source to be turned on, the fourth light source (450), which is a light source inside the well, among the plurality of light sources.

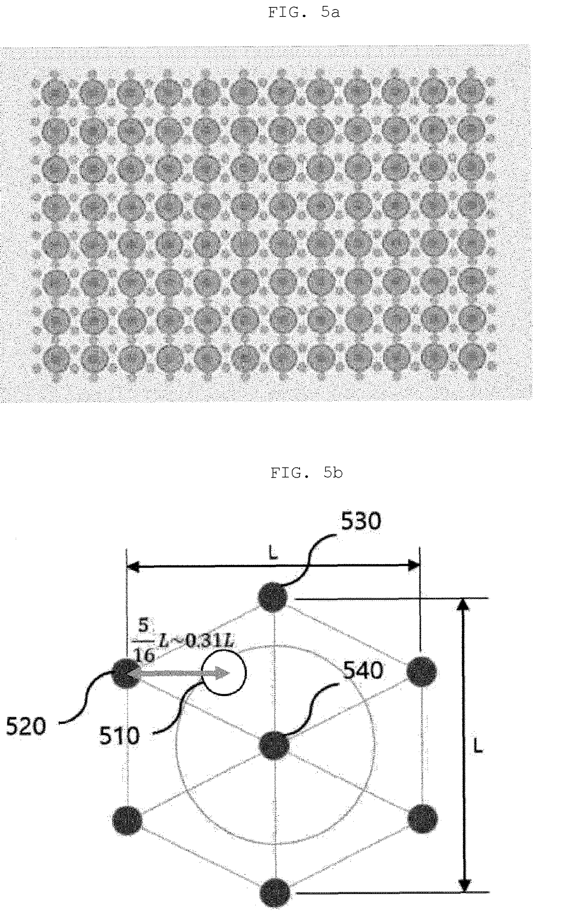

FIG. 5a is an example drawing illustrating a well plate and arrangement of a plurality of brightfield light sources used for brightfield imaging according to an embodiment of the present disclosure.

Referring to FIG. 5a, a schematic top view of the plurality of brightfield light sources and the well plate viewed from above is illustrated. In FIG. 5a, the well plate including 96 wells and a light source array unit of a hexagonal lattice will be described as an example. However, the number, shape, and arrangement of wells, and the number, shape, and arrangement of light sources are only examples and may of course be changed.

In an embodiment, there may be a brightfield light source that overlaps the well when viewed in top view, and there may also be a brightfield light source that does not overlap the well. The optical device may select, as a first brightfield light source, a light source closest to a position of an objective lens in top view when selecting the first brightfield light source corresponding to the objective lens. Alternatively, the optical device may select, as the first brightfield light source, a light source closest to the position of the objective lens among light sources that overlap the well in top view.

In the rectangular lattice as in FIG. 4a, the number of light sources required per 1 well may be

$$1 + \frac{1}{2} * 4 + \frac{1}{4} * 4 = 4$$ , and a maximum distance between the objective lens and the brightfield light source in top view may be $\frac{L}{2\sqrt{2}} \approx 0.35L$ . On the other hand, in the hexagonal lattice as in FIG. 5a, the number of light sources required per 1 well may be $1 + \frac{120}{360} * 6 = 3$ ,

and a maximum distance between the objective lens and the brightfield light source in top view may be $\frac{5}{16}L \approx 0.31L$ . Accordingly, when using the hexagonal lattice, the number of brightfield light sources required may be reduced compared to when using the rectangular lattice, and the distance between the brightfield light source and the objective lens may be reduced to facilitate central axis alignment with the objective lens. However, when using the rectangular lattice, the amount of calculation for finding the closest light source may be reduced, and it may be easier to find a brightfield light source closest to the objective lens, compared to when using the hexagonal lattice. Accordingly, a specimen imaging process may be performed using appropriate light source arrangement.

FIG. 5b is a drawing illustrating a method of selecting the first brightfield light source in a case of the arrangement of the plurality of brightfield light sources in FIG. 5a.

Referring to FIG. 5b, a top view of one well and brightfield light sources capable of illuminating the well or surroundings thereof in FIG. 5a is illustrated. In an embodiment, the light source device may select the first brightfield light source corresponding to a position of an objective lens (510).

For example, a light source closest to the position of the objective lens (510) may be selected as the first brightfield light source. In the example of FIG. 5b, a first light source (520), a second light source (530), and a third light source (540) may be selected as light sources closest to the position of the objective lens (510). In a case where there are a plurality of light sources closest to the position of the objective lens (510) as described above, the light source device may arbitrarily select one light source and determine the selected light source as the first brightfield light source to be turned on. Alternatively, in a case where there are a plurality of light sources closest to the position of the objective lens (510), the light source device may determine one light source according to a predetermined algorithm. For example, the optical device may determine, as the first brightfield light source to be turned on, the third light source (540), which is a light source inside the well, among the plurality of light sources. Alternatively, the optical device may arbitrarily determine the first light source (520) as the first brightfield light source.

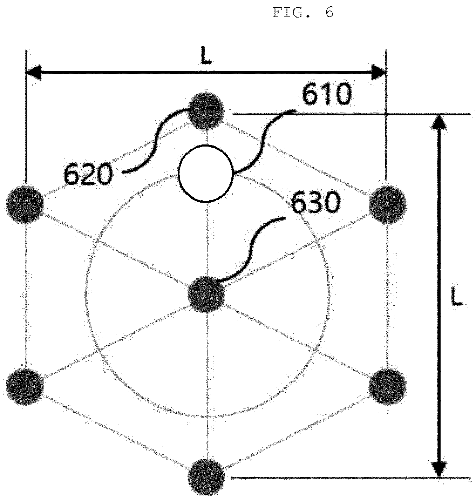

FIG. 6 is a drawing illustrating a method of selecting a first brightfield light source according to an embodiment of the present disclosure.

Referring to FIG. 6, the optical device may select the first brightfield light source corresponding to a position of an objective lens (610). In an embodiment, the optical device may select a first light source (620) closest to the position of the objective lens (610) as the first brightfield light source corresponding to the position of the objective lens (610). In another embodiment, the optical device may identify a second light source (630), which is a light source closest to the position of the objective lens (610), among light sources positioned inside a well in top view and select the second light source (630) as the first brightfield light source. That is, among brightfield light sources corresponding to positions inside the well, a light source closest to the objective lens may be selected as the first brightfield light source.

In the present disclosure, it is described that only one brightfield light source is turned on and the others are turned off, but one or more brightfield light sources may be turned on as needed.

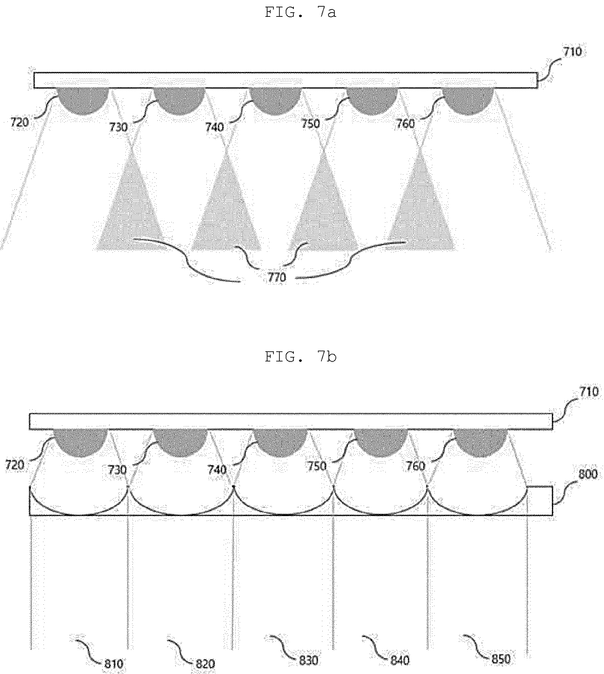

FIG. 7a is a drawing illustrating a case where regions illuminated by a plurality of brightfield light sources according to an embodiment of the present disclosure overlap each other.

Referring to FIG. 7a, a light source array unit (710) may include a plurality of brightfield light sources (720, 730, 740, 750, and 760). Since the plurality of brightfield light sources are closely arranged, regions illuminated by the respective light sources may partially overlap each other and form an overlapping region (770). Since the overlapping region is formed as described above, the optical device may need to go through a process of selecting one from several candidates when selecting the above-described first brightfield light source. In order to shorten a calculation time for the process, the optical device may further include an array as illustrated in FIG. 7b.

FIG. 7b is a drawing illustrating the array for preventing overlapping of the regions illuminated by the plurality of light sources according to an embodiment of the present disclosure.

Referring to FIG. 7b, the light source array unit (710) may include the plurality of brightfield light sources (720, 730, 740, 750, and 760), and the optical device may further include an array (800) for preventing overlapping of the regions illuminated by the plurality of brightfield light sources (720, 730, 740, 750, and 760). As the array (800) is provided, only the first light source (720) may illuminate a first region (810), only the second light source (730) may illuminate a second region (820), only the third light source (740) may illuminate a third region (830), only the fourth light source (750) may illuminate a fourth region (840), and only the fifth light source (760) may illuminate a fifth region (850). Accordingly, a brightfield light source to be turned on may be determined according to the position of the objective lens without a separate calculation process. For example, in a case where the objective lens is present in the third region (830), the third brightfield light source (740) corresponding to the third region (830) may be turned on.

According to an embodiment of the present disclosure, it is possible to reduce a time required to select a light source to be turned and rapidly perform specimen imaging by using the array that prevents overlapping of the regions illuminated by the plurality of brightfield light sources.

An embodiment of the present disclosure may also be implemented as a form of recording medium including an instruction executable by a computer, such as a program module executed by a computer. A computer-readable medium may be any usable medium that may be accessed by a computer and includes volatile and non-volatile media, and detachable and non-detachable media. Further, the computer-readable medium may include both a computer storage medium and a communication medium. The computer storage medium includes all of volatile and non-volatile media, and detachable and non-detachable media implemented based on any method or technology to store information such as a computer-readable instruction, a data structure, a program module, or other data. The communication medium typically includes a computer-readable instruction, a data structure, or a program module and includes an arbitrary information transmission medium.

The description of the present disclosure provided above is illustrative, and it is to be understood by those skilled in the art to which the present disclosure pertains that other specific modifications may be easily made without departing from the technical idea or essential feature of the present invention. Therefore, it is to be understood that the embodiments described hereinabove are illustrative rather than being restrictive in all aspects. For example, respective components described as a single form may be implemented in a distributed manner, and likewise, components described as being distributed may also be implemented in a combined form.

It is to be understood that the scope of the present disclosure will be defined by the claims described below rather than the detailed description described above and all modifications and alterations derived from the meanings and ranges of the claims and their equivalents fall within the scope of the present disclosure.

## Claims

1. An optical device comprising:

   an objective lens;
   a light source array unit including a plurality of brightfield light sources;
   a vessel stage positioned between the objective lens and the light source array unit; and
   at least one processor,
   wherein the at least one processor selects a first brightfield light source corresponding to a position of the objective lens among the plurality of brightfield light sources and turns on the first brightfield light source, and
   when the first brightfield light source is turned on, brightfield light sources other than the first brightfield light source among the plurality of brightfield light sources are turned off.

2. The optical device of claim 1, wherein the at least one processor acquires a specimen image by using the first brightfield light source.

3. The optical device of claim 1, wherein in the light source array unit, the plurality of brightfield light sources are arranged in a lattice shape at equal intervals.

4. The optical device of claim 3, wherein the lattice shape includes at least one of an oblique lattice, a rectangular lattice, a rhombic lattice, a hexagonal lattice, or a square lattice.

5. The optical device of claim 1, wherein the at least one processor selects, as the first brightfield light source, a light source closest to the objective lens among the plurality of brightfield light sources.

6. The optical device of claim 1, wherein in a case where there are a plurality of light sources closest to the objective lens among the plurality of brightfield light sources, the at least one processor selects, as the first brightfield light source, a light source corresponding to a position inside a well among the closest light sources.

7. The optical device of claim 1, wherein among brightfield light sources corresponding to positions inside a well, a light source closest to the objective lens is selected as the first brightfield light source.

8. The optical device of claim 1, wherein the at least one processor recognizes movement of the position of the objective lens from a first position to a second position, turns off the first brightfield light source corresponding to the first position, and turns on a second brightfield light source corresponding to the second position.

9. The optical device of claim 1, wherein the first brightfield light source corresponding to the position of the objective lens includes one or more brightfield light sources arranged in the light source array unit.

10. The optical device of claim 1, further comprising an array for preventing overlap of areas illuminated by the plurality of brightfield light sources.

11. A method of operating the optical device according to any one of claims 1 to 10, wherein the optical device including a light source array unit that includes a plurality of brightfield light sources, and the method of operating comprising:

    selecting a first brightfield light source corresponding to a position of an objective lens among the plurality of brightfield light sources; and
    turning on the first brightfield light source,
    wherein when the first brightfield light source is turned on, brightfield light sources other than the first brightfield light source among the plurality of brightfield light sources are turned off.

FIG. 1a

110 Light source

120 Vessel

130 Objective lens

FIG. 1b

FIG. 2

210

Light source

220

Vessel

230

Objective lens

FIG. 3

FIG. 4a

**96 well plate**

**well**
**Light source**

FIG. 4b

420    430

L

$\frac{L}{2\sqrt{2}}$ ~0.35L

Light source

Objective lens

410

440    450

Well

L

FIG. 5a

FIG. 5b

FIG. 6

FIG. 7a

FIG. 7b

## INTERNATIONAL SEARCH REPORT

| International application No. |
|---|
| **PCT/KR2024/001685** |

**A.    CLASSIFICATION OF SUBJECT MATTER**

**G01N 21/84**(2006.01)i; **G02B 21/12**(2006.01)i; **G02B 21/36**(2006.01)i; **G02B 7/00**(2006.01)i; **G02B 5/20**(2006.01)i; **G02B 7/182**(2006.01)i; **G02B 21/06**(2006.01)i; **G01N 21/17**(2006.01)i

According to International Patent Classification (IPC) or to both national classification and IPC

**B.    FIELDS SEARCHED**

Minimum documentation searched (classification system followed by classification symbols)

G01N 21/84(2006.01); G01N 21/01(2006.01); G01N 21/27(2006.01); G02B 21/00(2006.01); G02B 21/06(2006.01); G02B 21/36(2006.01); G06T 7/00(2006.01); G06T 7/11(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 명시야(brightfield), 광원(light source), 대물렌즈(objective lens), 현미경 (microscope), 매칭(matching)

**C.    DOCUMENTS CONSIDERED TO BE RELEVANT**

| Category* | Citation of document, with indication, where appropriate, of the relevant passages | Relevant to claim No. |
|---|---|---|
| X | JP 2017-125789 A (SCREEN HOLDINGS CO., LTD.) 20 July 2017 (2017-07-20)<br>See paragraphs [0022]-[0081] and figures 1, 9 and 11. | 1-8,10,11 |
| Y | | 9 |
| Y | KR 10-1873318 B1 (CYTOGEN, INC.) 03 July 2018 (2018-07-03)<br>See paragraph [0034]. | 9 |
| A | JP 2010-271537 A (OLYMPUS CORP.) 02 December 2010 (2010-12-02)<br>See paragraph [0058] and figure 4. | 1-11 |
| A | KR 10-2021-0001516 A (SMALL MACHINES et al.) 06 January 2021 (2021-01-06)<br>See paragraphs [0043] and [0051] and figure 3. | 1-11 |
| A | KR 10-2293757 B1 (FUJIFILM CORPORATION) 24 August 2021 (2021-08-24)<br>See claim 1 and figure 1. | 1-11 |

☐ Further documents are listed in the continuation of Box C.          ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **03 May 2024** | **08 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/001685**

| Patent document cited in search report | | | Publication date (day/month/year) | Patent family member(s) | | | Publication date (day/month/year) |
|---|---|---|---|---|---|---|---|
| JP | 2017-125789 | A | 20 July 2017 | JP | 6320436 | B2 | 09 May 2018 |
| | | | | TW | 201734431 | A | 01 October 2017 |
| | | | | TW | I641824 | B | 21 November 2018 |
| | | | | WO | 2017-122401 | A1 | 20 July 2017 |
| KR | 10-1873318 | B1 | 03 July 2018 | KR | 10-2017-0038726 | A | 07 April 2017 |
| | | | | WO | 2017-057966 | A1 | 06 April 2017 |
| JP | 2010-271537 | A | 02 December 2010 | None | | | |
| KR | 10-2021-0001516 | A | 06 January 2021 | KR | 10-2243079 | B1 | 21 April 2021 |
| | | | | US | 10768401 | B1 | 08 September 2020 |
| KR | 10-2293757 | B1 | 24 August 2021 | EP | 3604495 | A1 | 05 February 2020 |
| | | | | JP | 6873231 | B2 | 19 May 2021 |
| | | | | KR | 10-2019-0107096 | A | 18 September 2019 |
| | | | | US | 11030751 | B2 | 08 June 2021 |
| | | | | US | 2019-0370973 | A1 | 05 December 2019 |
| | | | | WO | 2018-180813 | A1 | 04 October 2018 |

Form PCT/ISA/210 (patent family annex) (July 2022)